# EUROPEAN PATENT APPLICATION

(11) **EP 2 584 459 A1**
(43) Date of publication of application: **24.04.2013**
(21) Application number: 11186250.4
(22) Date of filing: 21.10.2011
(51) Int. Cl.: G06F 3/16, G06F 21/00, G06F 3/043

(54) **System and method for changing an activation state of an electronic device using acoustic signals**

(71) Applicant: Research In Motion Limited, Waterloo, ON N2L 3W8 (CA)
(72) Inventor: Buchmann, Michael, Bochum 44799 (DE)
(74) Representative: Moore, Barry

(57) **Abstract**

The disclosure relates to a system and method for unlocking and unlocking activation to a device. An activation management system of an embodiment comprises: a sensor providing an output signal when the sensor is activated by an acoustic signal; and an activation module receiving the output signal from the sensor. The activation module evaluates the output signal against a pattern and to change an activation state of the device if the output signal completes a match for the pattern.

## Description

### FIELD OF DISCLOSURE

The disclosure described herein relates to a system and method for changing an activation state of an electronic device, i.e., locking and unlocking the device. In particular, the disclosure described herein relates to using detected tapping sounds on the device that match a prescribed pattern to activate/deactivate one or more features on the device.

### BACKGROUND

Portable electronic devices, such as mobile communication devices (such as smart phones, personal digital assistants or portable computers such as tablet computers), perform a variety of functions. One representative function is to enable users to stay current with information and communications, such as e-mail, corporate data and organizer information, while they are away from their desks. Another representative function is to store information, such as documents or pictures. The devices may contain sensitive information or information that a user may wish to remain private, for any reason. Frequently it is useful to provide a locking/unlocking system to such a device that allows a person to access the device. In the event a device is lost or stolen, the one finding the device will not be easily able to bypass the locking system. In general, when a device is locked, only a small subset of features (such as limited display of information or a capability to enter a password) is accessible to a user, and full functionality is prohibited. Known locking/unlocking systems include password routines and biometric scanners. To lock a device in an existing system, a user typically presses a specific shortcut key or locks the device via a menu option. To unlock a device, a user may be prompted to type in a password via the keypad.

Some portable electronic devices, in the interest of conserving power or for other reasons, may automatically or at the command of a user reduce the functionality and operate in a fashion that consumes less power. Manners of operation (or states or modes) in which functionality is scaled back may be called by various names, such as "stand-by" operation or "low-power" mode or "quiet mode" or "sleep." Electronic devices may scale back functionality or conserve power by, for example, turning off or dimming displays, or operating an internal processor at a lower operating frequency. Whether or not a device is in a low-power state is not necessarily a function of whether the device is locked or not. It is possible, for example, for a device to be locked and "sleeping," but not all locked devices are necessarily sleeping and not all sleeping devices are necessarily locked. Some electronic devices may be removed from such manners of operation by activation, sometimes also called "waking." Activation may be prompted by, for example, an event such as an alarm or a received telephone call or a user interaction with the device.

### BRIEF DESCRIPTION OF THE DRAWINGS

Embodiments of the disclosure will now be described, by way of example only, with reference to the accompanying drawings, in which:

Fig. 1 is a schematic representation of an electronic device having an activation system in accordance with an embodiment;

Fig. 2 is a block diagram of selected components of the activation system in the device in Fig. 1;

Fig. 3A is a block diagram of an n sensor system for one type of activation system of Fig. 2;

Fig. 3B is a block diagram of a two sensor system for a second type of activation system of Fig. 2;

Fig. 4 is a flow chart of processes executed by the activation system of Fig. 1;

Fig. 5 is a schematic diagram of a graphical user interface (GUI) generated on a display of the device in Fig. 1; and

Fig. 6 is a block diagram of selected components of the device in Fig. 1.

### DETAILED DESCRIPTION OF AN EMBODIMENT

The description which follows and the embodiments described therein are provided by way of illustration of an example or examples of particular embodiments of the principles of the present disclosure. These examples are provided for the purposes of explanation and not limitation of those principles and of the disclosure. In the description which follows, like parts are marked throughout the specification and the drawings with the same respective reference numerals.

Generally, an embodiment provides a device, system and method to change an activation state of a device, component, system, module or other element (either within the device or for another device) using acoustic signals detected from one or more sensors in the device as a trigger condition. Such sensors detect acoustic signals that are generated when a housing of the device and / or a component on the device (e.g. the display, a key, an input device, etc.) is tapped and / or a sound is made around the device. The acoustic signals can be in any detectable frequency range, whether in the human audible range (approximately 20 Hz to 20 kHz), below that range, above that range or spanning across that range. Generally, an activation state is an operating state for the device, namely, a state where the device has one or more components, applications and / or modules activated and one or more components, applications and / or modules not activated or partially activated. For example, one activation state is a fully on state, where all of the (major) communication capabilities of the device are activated; another activation state is a sleep state, where one or more components (such as its communication components and display) of the device are deactivated; another activation state is a locked state, where access to components, applications and / or modules are restricted until an unlocking event is detected by the device; another activation state is an off state, where only a minimum set of components (e.g. its microprocessor) are activated. There may be one or more levels of sleep modes, where different numbers of components/applications are activated.

One embodiment provides an activation management system to change an activations state of an electronic device - such as, but not limited to, a (portable) wireless communication device, a laptop computer or a personal computer - using signals generated by the sensors in response to detected acoustic signals. The activation system may cause a change in state of the device, which in general changes one or more functions that are operating or that may be available for immediate usage. In a typical implementation changing an activation state may to activate or deactivate a component or module in the device, or activate or deactivate a software application running on the device. Changing an activation state may also implement an intermediate level of activation, such as dimming a component or running a software application at a lower rate. The component may be controlled by a processor in the device or may be controlled by an activation system, circuit and /or module. Multiple components may be controlled by the system.

For purposes of the discussion herein, changing an activation state of a device may include, for example, waking the device from sleep or unlocking a locked device. For one example of an activation state change, consider a device that is "locked", where only a small subset of features is accessible to a user. The user wishes to "unlock" the device to use additional features. For an embodiment, one "key" to unlocking the device is to trigger one or more sensor(s) in a manner that matches the device's "unlocking" pattern. In the device, the activation system analyzes signals generated by a sensor. For example, "taps" on the device may be an expected audible signal. When an acoustic sensor detects, or "picks up", acoustic energy (i.e. sounds) generated by such taps on the device, the electrical signal(s) that the sensor generates is provided to the activation system. Part of the system includes an activation management module that evaluates the electrical signal(s). If the signal(s) match and / or complete an "unlocking" pattern, then the device is "unlocked" and additional features of the device can be activated. When the device is in an "unlocked" state, it can then be placed into a "locked" state by detection of electrical signal(s) that match and / or complete a "locking" pattern.

In one embodiment, detection of "unlocking" and "locking" patterns used to activate/ deactivate a feature of the device are provided as preset tapping pattern(s), such as a series of taps in an expected timed sequence. The taps, which generate acoustic energy, are detected by the acoustic sensor. The sensor is a transducer, such as a microphone.

Aspects of an embodiment are described.

In a first aspect, an activation management system for an electronic device is provided. The management system comprises: a sensor providing an output signal when the sensor is activated by an acoustic signal; and an activation module receiving the output signal. The activation module evaluates the output signal against a pattern to determine if the output signal completes a match for the pattern and changes an activation state of the device if the output signal completes the match. The output signal is an electrical signal proportionate to or otherwise a function of acoustic energy in the acoustic signal received by the sensor.

In the system, a tapping on a housing of the device may be the acoustic signal; and the sensor may be a microphone.

In the system, the activation module may further comprise a signal filter to isolate the output signal from other acoustic signals detected by the microphone.

In the system, the signal filter may disregard the acoustic signal disregards the acoustic signal if a magnitude of the acoustic signal is below a threshold.

In the system, the pattern may be a locking pattern; and the activation module may change the activation state to a locked state if the output signal completes the match for the pattern. The locked state may prohibit activation of at least one module operating on the device.

In the system, the pattern may be an unlocking pattern; and the activation module may change the activation state to an unlocked state if the output signal completes the match for the pattern. The unlocked state may allow activation of at least one application operating on the device.

In the system, the pattern may comprise parameters selected from any combination of one or more of: a defined time separation between acoustic signals received by the device, a determined location of the acoustic signal, a decay rate of the acoustic signal, an attack rate of the acoustic signal, a pitch of the acoustic signal and a magnitude of the acoustic signal.

In the system, the activation module may evaluate an audio file against the output signal to determine if the output signal completes the match.

In the system, the activation module may further evaluate a keystroke against keystroke entries on a keypad associated with the device to determine if the activation state is to be changed.

The system may further comprise a pattern adjustment module operating on the device providing a graphical user interface (GUI) providing an icon to define an expected location on the device for a source of an acoustic element of the pattern.

In the system, the pattern adjustment module may generate in the GUI an outline of a device to receive the icon.

In the system, the pattern adjustment module may further generate a second GUI allowing a modification to be made to the element in the pattern.

The system may further comprise a module to record audible signals for use as an acoustic element of the pattern.

In a second aspect, a method for controlling activation of modules operating on an electronic device is provided. The method comprises: monitoring for an output signal generated from a sensor in the device when the sensor detects an acoustic signal; evaluating the output signal against a pattern; and changing an activation state of the device if the output signal completes a match for the pattern. THE output signal is an electrical signal proportionate to or otherwise a function of acoustic energy in the acoustic signal received by the sensor.

In the method, a tapping on a housing of the device may be the acoustic signal; and the sensor may be a microphone.

The method may further comprise disregarding the output signal if a magnitude of the output signal is below a threshold.

In the method, the pattern may be a locking pattern; and the activation state may be changed to a locked state if the output signal completes a match for the pattern. The locked state may prohibit activation of at least one application operating on the device.

In the method, the pattern may be an unlocking pattern; and the activation state may be changed to an unlocked state if the output signal completes a match for the pattern. The unlocked state may allow activation of at least one application operating on the device.

In the method, the pattern may comprise parameters selected from any combination of: a defined time separation between acoustic signals received by the device, a determined location of the acoustic signal and a magnitude of the acoustic signal.

The method may further comprise providing a GUI providing interface and an icon to define an expected location on the device for a source of an acoustic element of the pattern.

In other aspects, various combinations of sets and subsets of the above aspects are provided.

Now, details of exemplary embodiments are provided herein. First, a description is provided on general concepts and features of an embodiment. Then, further detail is provided on control features relating to the activation system.

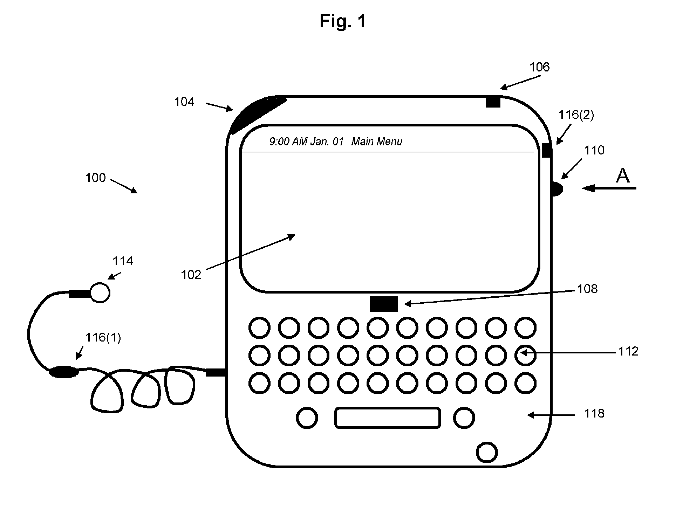

Referring to Fig. 1, electronic device 100 is based on a computing platform having functionality of an enhanced personal digital assistant with cellphone and e-mail features. It is, however, to be understood that electronic device 100 can be based on construction design and functionality of other electronic devices, such as tablet computing devices (or simply tablets), smart telephones, desktop computers, laptop computers, personal digital assistants (PDAs), cameras, gaming devices, video cameras, pagers or laptops having telephony equipment. In a present embodiment, electronic device 100 includes a display such as a liquid crystal display (LCD) 102, speaker 104, LED indicator 106, input device 108 (which may be a key, touchpad, trackpad, trackball, light sensor or any other input device), ESC ("escape") key 110, keypad 112, a telephone headset comprised of an ear bud 114 and an acoustic sensor, provided as microphone 116(1). A second acoustic sensor, provided as microphone 116(2), is mounted inside device 100. More acoustic sensors can be provided. ESC key 110 can be inwardly depressed as a means to provide additional input to device 100. ESC key 110 may be depressed along the path of arrow "A". An alternative embodiment of device 100 (not shown) may incorporate a minimized set of external keys. As such, LCD 102 may present a virtual keypad on its display, which replaces or supplements one or more of keypad 112, key 112 or other keys. In one embodiment of device 100, no keys may be provided.

Device 100 is operable to conduct wireless telephone calls, using any known wireless phone system such as a Mobitex (trade-mark) network, a DataTAC (trade-mark) network, a General Packet Radio Service (GPRS) network and also a variety of voice communication networks, such as Advanced Mobile Phone Service (AMPS), Time Division Multiple Access (TDMA), Code Division Multiple Access (CDMA) system, wireless CDMA, CDMA 2000 system, Cellular Digital Packet Data (CDPD) system, Personal Communication Service (PCS), Global System for Mobile Communication (GSM), Wi-Fi networks, 3GPP Long Term Evolution (LTE) networks, etc. Other wireless phone systems that AP 114 can operate with can include Wireless WAN (IMS), Wireless MAN (Wi-Max or IEEE 802.16), Wireless LAN (IEEE 802.11), Wireless PAN (IEEE 802.15 and Bluetooth), high-speed data packet access (HSDPA) networks, etc. and any others that support voice. Additionally, a Bluetooth network may be supported. Other embodiments include Voice over IP (VoIP) type streaming data communications that can simulate circuit-switched phone calls. Device 110 has capabilities of communicating with other devices using various communication technologies, including instant messaging (IM) systems, text messaging (TM) systems and short message service (SMS) systems.

Ear bud 114 can be used to listen to phone calls and other sound messages and microphone 116(1) can be used to speak into and to receive sounds to device 100. Microphone 116(2) can also be used to speak into and to receive sounds.

Housing 118 encloses internal components of device 100. Housing 118 can be made from any material that may be formed to house and hold all components of device 100. It may be made of a combination of one or more of metal components and plastic components. Depending on the composition and dimensions of housing 118, tapping its surface may generate different acoustic signals. For example when housing 118 is made of metal, a tap on its surface will generate an acoustic sound, having a distinctive timber, attack, decay and duration characteristics. Whereas when housing 118 is made of a plastic material, a tap on its surface will generate a different acoustic sound, having another distinctive timber, attack, decay and duration characteristics. The location of the taps will also affect the characteristics of the acoustic sound - a tap on the front face of housing 118 can have a different characteristic than a tap on the side and / or back of housing 118. The location of a sensor within device 100 will also affect the characteristics of the received acoustic sound.

For the sake of convenience, and not limitation, the following orientation terms are used in regards to device 100. The "front" of device 100 refers to the main face of device 100 that includes display 102. The "back" of device 100 refers to opposite side of the front of device 100. The "left side" of device 100 refers to a left side of device 100 when a user is looking at the front of device 100, oriented in a right-side up manner. The "right side" of device 100 refers to a right side of device 100 when a user is looking at the front of device 100, oriented in a right-side up manner. The "top" of device 100 refers to a top side of device 100 when a user is looking at the front of device 100, oriented in a right-side up manner. The "bottom" of device 100 refers to a bottom side of device 100 when a user is looking at the front of device 100, oriented in a right-side up manner.

Device 100 can have a fairly small form factor, allowing it to be easily held and manipulated in one or two hands. Frequently, a holster for device 100 is provided, but not used. As such, with a single-hand operation of device 100 being common place, it can be readily apparent that a system and method providing a physically simple means to lock and unlock device 100, even using only one hand, would be embraced by users. Similarly, with slightly larger devices, e.g. tablet devices, laptop computers etc., two hands (and in some instances one hand) may be used to hold device 100.

When device 100 is implemented as a fairly small form factor, a typical orientation for a user is to hold device 100 in his palm of one hand, and to support device 100 among his thumb and his last three fingers. In this orientation, his index finger is free to move. As such, this finger (or any other free finger) can tap against the back of housing 118 of device 100. Additionally or alternatively, taps may be made on the front, sides, top or bottom of device 100. It will be appreciated that detection and analysis of a series of taps by the user provides a detection mechanism as a "password" to lock and unlock device 100. This audible interface provides a key-less method and system to lock/unlock access to device 100. Use of a tapping interface reduces a need for the user to look for a specific key or button to activate device 100, although the tapping interface can be used in addition to existing password access systems on device 100.

When device 100 is implemented as a slightly larger form factor (e.g. for a tablet device), a typical orientation for a user is to hold device 100 in the palms of both hands, cradling his fingers around the bottom of device 100 with thumbs on the top. Device 100 (in any form) can also be resting on a flat surface (e.g. a table) and user may be holding one or both hands above / around the housing of device 100. It will be appreciated that device 100 may be held in many other orientations with none, one or both hands.

In any event, for an embodiment, a tapping pattern on housing 118 can be recognized as a series of acoustic input signals received by device 100. A sensor, such as microphone 116(1) or 116(2) or any type of suitable transducer, is provided in device 100 to detect acoustic energy with sufficient sensitivity and frequency range may be employed to detect the acoustic signals generated (e.g., "taps") from tapping device 100. A pattern may be of any of several kinds, and may encode information in a number of ways. A pattern may include, for example, a defined number of taps within a defined time interval, or taps separated from one another by one or more intervals (e.g., like Morse code). A pattern may include a series of taps at a particular frequency, or a sequence that changes frequency (such as a sequence of rapid taps followed by slower taps). A pattern may also include, for example, light (or quieter or moderate magnitude) taps and heavy (or louder or higher magnitude) taps. A pattern may include taps made at different places on the device. A tap will have a particular magnitude, which will be translated into a proportional electrical signal (e.g. voltage, current signal) by the transducer. The output signal is generally a function of the acoustic energy in the acoustic signal received by the sensor. The signal may be a digital signal and / or may be converted to a digital value. Signals with a lower magnitude, e.g. signals that do not have a sufficient magnitude to pass a threshold, may be disregarded and / or filtered by downstream components to a sensor. A light tap will generate a signal with a moderate magnitude and a heavy tap will generate a signal with a higher magnitude. A pattern may include any or all of these encoding techniques, or others not specifically listed, and may be of any length.

Generally, a tap on housing 118 generates a distinctive acoustic signature (measured as a frequency response signal) so it can be distinguished from other ambient audible vibrations or a human voice. It will be appreciated that the taps as described herein may be provided by a user's body part, such as a finger or knuckle; however, it will be appreciated that any tool (such a pencil) may be used to input a tap signal or part of a tap signal by rapping the tool against or near housing 118. Similarly knocking device 100 against another object (e.g. against a desk) will generate an audible "knock" that can be detected by the sensor. Further still for other embodiments, the system may analyze words, phrases, phonemes, tongue clicks, cheek taps, "popping" sounds, whistles, knocks, finger drumming, finger snaps, hand claps or other sounds that a person can generate vocally or through other body parts on or near device 100 as part of an acoustic signature. A sound may have an expected pitch, timber, decay, attack and / or volume.

As acoustic signals can be generated by tapping device 100 and by human-generated methods as noted above, it will be appreciated that an embodiment processes acoustic signals received by device 100 from any source, whether such signals are generated from a physical tap (or other mechanical means) and / or from a human. For the sake of convenience and not limitation, when the term or context of tapping device 100 is described herein, the concept of providing a human generated sound is included therein, *mutadis mutandis,* although not expressly mentioned, unless otherwise noted. The phrase "tap/sound" and variants may be used as a short-form description for a combination of tap signals and / or human generated sounds.

With a sensor in device 100 accompanying software, module, application, firmware and / or hardware are provided by an embodiment to monitor for and interpret such acoustic signal(s). Such signals can be used as a trigger condition to evaluate whether to change an activation state of device 100. For example, the detected acoustic signals (and / or their associated output signal generated by an acoustic sensor) can be evaluated to determine whether an acoustic "password" is being tapped/sounded into device 100 and whether the "password" is matches an expected password. If the password is matched, then an embodiment can provide that a change to an activation state of device 100, generally to a different state that provides access to at least one more function/component/application/module than the current activation state of device 100. Similarly, when device 100 is being used with a given level of access to its functions, an activation state of device 100 can be changed from an operating state where of a locked can be "locked" by tapping/sounding a "locking" pattern on its housing and / or by generating appropriate sounds detected by device 100. With the tapping/sounding interface, locking or unlocking device 100 can be done quickly and seamlessly, such as while device 100 is being brought to or removed from a pocket of a user as he holds it in his hand.

For locking / unlocking patterns, while any patterns can be used, they are preferably simple enough to be remembered, but complex enough to not be easily mimicked and to prevent false positive patterns. For example, a locking pattern may be as simple as two taps in a defined time period. While the locking pattern may be a single tap/sound, a single tap/sound may lead to false positives, such as an inadvertent nudge or sound causing device 100 to be incorrectly locked. The locking pattern may or may not be identical to the unlocking pattern. For the unlocking pattern, an "unlock" tap/sound pattern may be used for the access "password", which may replace or augment a traditional text-type password.

A tap/sound pattern password may incorporate expected taps from different locations on the device (e.g. a first tap from the back of device 100, a second tap from the left side and a third tap from the front) and expected receipt of one or more sounds. Expected values can be changed depending on characteristics of housing 118 (e.g. whether it is made of metal or plastic, etc.).

Also, device 100 can provide a learning routine to allow the user to provide a tap/sound input to define a locking or unlocking signal through a GUI, similar to a GUI used for text passwords known to those of skill in the art.

It will be appreciated that in most instances, acoustic signals detected by device 100 are not affected by the orientation of device 100 itself. As such a tap signal that is made at a specific location on device 100 with a specific force will be detected with the same reading by an acoustic sensor in device 100 regardless of the physical orientation of device 100 (e.g. device 100 is right-side up or tilted to its right). Similarly, a sound that is made around device 100 will be detected with the same reading by an acoustic sensor in device 100 regardless of the physical orientation of device 100. However, as a variance, device 100 may be expected to be held in a specific orientation, such as on its side, and then a tap pattern may be applied. In this instance, device 100 may have another detector (e.g. an accelerometer) to detect specific "g" acceleration(s) for movement(s) of device 100 and such movement signals may be used with the detected acoustic signals as part of a tap/sound pattern. Combinations of tap/sound patterns and / or locations may be used.

The tapping/sounding interface may provide a first access stage in a multiple password system. In a two-stage access system, a tapping/sounding interface can be used to allow a user to access a certain subset of data, modules or applications on device 100. An additional, traditional text password interface may be provided to control access to additional data, modules or applications. Other variations are possible. For example, to initially turn on a "locked" device 100, a two-stage tap/sound password system may be deployed. To first activate device 100 when it is first picked up, a tap/sound password may be required to initially activate display 102 of device 100 and activate an "unlock" screen. To access the full module set of device 100, a second evaluation for further access is conducted, such as requesting that an access password be tapped/sounded, requesting a text password to be entered or requiring that device 100 be moved or held in a certain orientation (detected by an accelerometer in device 100). The password mechanisms for the first and second stages may be interchanged.

Now, detail is provided on exemplary device 100 that incorporates an activation system according to an embodiment, followed by some exemplary processing/analysis algorithms implemented by activation systems according to various embodiments.

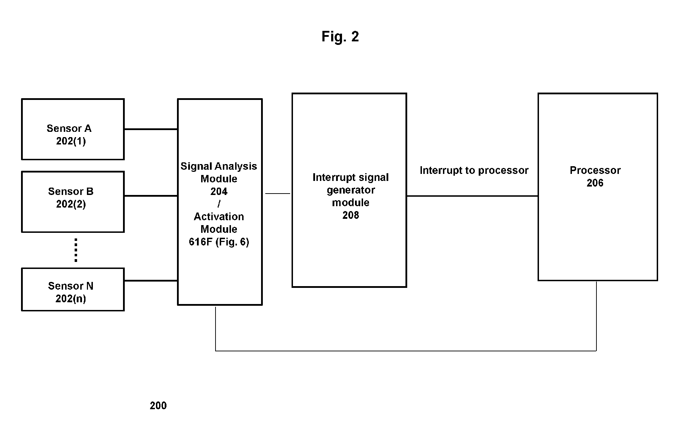

Referring to Fig. 2, some components of activation system 200 provided in device 100 according to an embodiment are shown. Device 100 has power management features that allow it to selectively change an activation state (i.e. activate or deactivate) of one or more of its components based on conditions detected and derived by device 100. For example, after a period of non-activity, device 100 may turn off its display (and other function(s)). Subsequently, upon detection of an activation condition, the display (and / or other functions) may be reactivated. In another example, a user may actively put device 100 into a sleep mode. For the purpose of the disclosure, the features described herein may be applied to activate device 100 that is in a sleep mode (that is, to discontinue a lower-power mode and begin a higher-power mode) without regard to how device 100 entered sleep mode.

Activation system 200 controls how and when certain components in device 100 are activated. Activation system 200 includes acoustic sensors 202, signal analysis module (SAM) 204 and processor 206. Types of acoustic sensors 202 include any of microphones 116(1) and 116(2). An acoustic sensor generates output signals that are electric signals proportionate to the acoustic energy received by the sensor. Although shown for clarity as separate components, some of the elements of activation system 200 may be (but need not be) embodied within one or more unified physical structures.

Processor 206 may be a multi-function microprocessor. Output signals generated by sensors 202 are supplied to SAM 204. Sensors 202 may be any device, apparatus and / or transducer that generate a signal in response to a detected acoustic signal. Exemplary sensors include a microphone and other sound or pressure sensors, etc. Exemplary microphone types include dynamic microphones, condenser microphones, piezoelectric microphones and light modulation devices that produce an electrical voltage signal from a detected mechanical vibration of a diaphragm or the like caused by an acoustic signal. A microphone can have different sensitivity and output signal characteristics compared to other microphones of other technologies and even other microphones of the same technology.

SAM 204 may generate an activation signal in response to one or more output signals received from sensors 202, which may be supplied to processor 206 directly and / or through interrupt signal generator module (ISGM) 208. Sensors 202 may detect one or more of the conditions noted earlier. Generally, upon detection of an acoustic signal (e.g. a tapping sound), sensors 202 generate electrical signals as output signals that are related (i.e., proportional) to the strength and characteristics of the acoustic signal detected. SAM 204 also can be set to filter and scale received signals, allowing signals from different sensors 202 to be compared on an equivalent value basis. For example, sensor 202a may be a piezoelectric microphone that generates output signals between approximately -1 and +1 volt; sensor 202b may be a condenser microphone and may generate signals between approximately 0 and 3 volts (or other ranges) for a certain range of detected acoustic signals; and sensor 202c (not shown) may also be a microphone of a different kind that may generate signals between 0 and 5 volts (or other ranges) for the same acoustic signal. These different ranges can be normalized by SAM 204 so that (for example) signals from different sensors can be compared. SAM 204 may also filter extraneous or meaningless signals (e.g. signals that are too small, too large, too infrequent, etc.). SAM 204 may also provide a signal filter to isolate output signals detected from sensor(s) 202 from other acoustic signals in the signals (e.g. background hiss, static, etc.). SAM 204 and / or a signal filter may also disregard the acoustic signal (and / or its output signal) if a magnitude of the acoustic signal (and / or its output signal) is below a threshold.

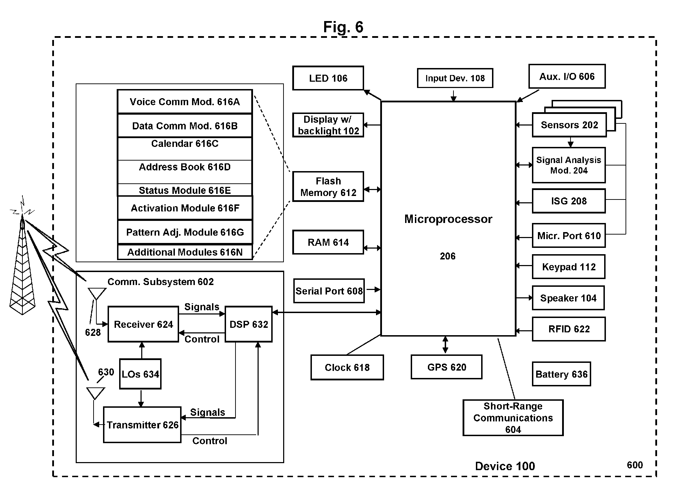

In another embodiment, some or all of processing and evaluation functions for SAM 204 may be conducted in a module that operates on processor 206. Such a module may also operate with SAM 204. An exemplary module is an activation module (616F, Fig. 6), for which further detail is provided later in this disclosure. For the sake of convenience, and not limitation, features described for SAM 204 include by incorporation, features described for activation module 616F (Fig. 6), and vice versa, unless otherwise noted. Further, in another embodiment, features described for SAM 204 include by incorporation, features described for ISGM 208, and vice versa, unless otherwise noted.

In another embodiment an output signal of a sensor may be generated as a digital value and / or the output signal may be converted to a digital value. The digital value may then be processed by a module operating on processor 206 and compared against digital value(s).

In the embodiment of Fig. 2, processor 206 is the main control component of device 100. Processor 206 may execute instructions (e.g., stored in a memory element, not shown in Fig. 2) that regulate, monitor or control a variety of the functions for device 100. Once an activation signal is generated by SAM 204, processor 206 may activate a component in device 100, that is, processor 206 may place a component that had been in a lower-power state into a higher-power state, for example, by allowing power to be supplied to the component. Processing of the signals from sensors 202, SAM 204 or ISGM 208 may be conducted in the analog domain, the digital domain or a hybrid analog/digital domain.

In an alternative embodiment, signals generated by sensors 202 may be supplied directly to processor 206. In the embodiment depicted in Fig. 2, however, information is passed to SAM 204, then to ISGM 208. Signals from ISGM 208 may be supplied to an interrupt line of processor 206. This allows signals from ISGM 208 (and ultimately from sensors 202) to provide "real time" input values that an interrupt process operating on processor 206 can use to determine what the signals from sensors 202 mean and what actions, if any, to take in view the signals.

Processor 206 may operate in a "sleep" or lower power mode until an activation signal is provided to it from sensors 202 and / or SAM 204. Sensors 202 may be a passive or quasi-passive device, requiring little or no electrical power to operate. As such, device 100 may be placed in a low(er) power state, with processor 206 operating in a sleep or lower power mode, while still being able to receive and analyze sounds received by sensors 202. Power may need to be provided to components in SAM 204 for such analysis. As such, an embodiment provides an activation system that reduces the number of components (notably processor 206) that need to be activated in order to process acoustic signals for an activation system. It can be seen that an embodiment provides a low-power interface to lock/unlock access to features on device 100 without necessarily using an input key on device 100.

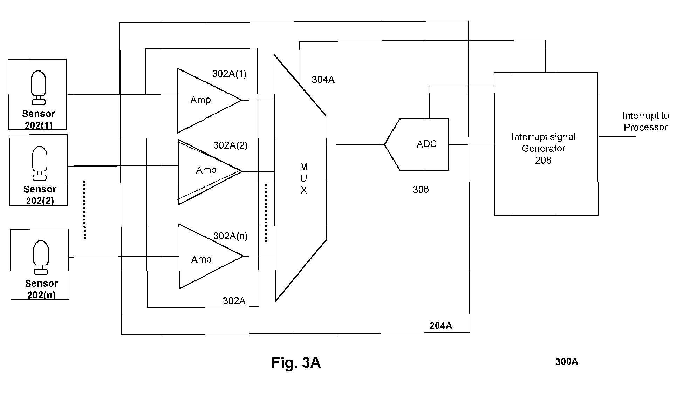

Referring to Fig. 3A, further detail is provided on aspects of SAM 204 and its related components. System 300A shows N sensors 202 connected to module SAM 204A containing N amplifiers 302A, which then have their outputs attached to an analog multiplexer (mux) 304. Mux 304 selectively provides its output according to a control signal generated by logic and ISGM 208. The analog output of mux 304 is converted to a set of digital signals by analog to digital converter 306, which then provides the output to logic and ISGM 208. The output of ISGM 208 may be provided as an interrupt signal to processor 206. Alternatively, functions of amplifiers 302, mux 304, analog to digital signal converter 306 and interrupt generator may be provided in processor 206 or may be provided as separate components. As with other implementations, software operating on processor 206 can be provided to evaluate signals from sensors 202 and determine when a notable signal has been generated by sensors 202.

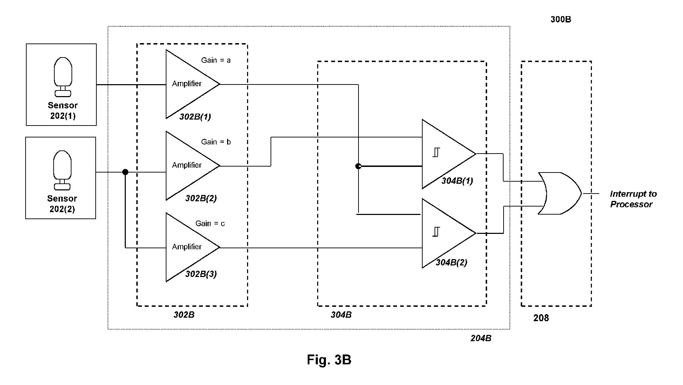

Referring to Fig. 3B, alternative SAM 204B is shown for sensors 202(1) and 202(2). Briefly, in system 300B, the output of sensors 202 are provided to amplifying stage 302B. Sensor 202(2) is connected in parallel to amplifiers 302B(2) and 302B(3), each providing a gain of "b" and "c". Sensor 202(1) is connected to amplifier 302B(1), providing a gain of "a". The output of buffer amp 302B is provided in tandem to comparator stage 304B. Comparator 304B(1) compares signals from amplifiers 302B(1) and 302B(2). Comparator 304B(2) compares signals from amplifiers 302B(1) and 302B(3). The other inputs of comparators 304B(1) and 304B(2) provided to ISGM 208, implemented as an OR gate, which provides a trigger signal that can be provided as an interrupt signal to processor 206. It will be appreciated that amplifier stage 304B and ISGM 208 can be implemented in other arrangements to implement different triggering logic as dictated by a specific implementation. Other embodiments may use three or more sensors which would have different circuits and logic for amplifiers 302B, comparators 304B and ISGM 208.

It will be appreciated that other modules and circuits using different combinations of sensors, triggering components and threshold evaluators may be used to provide functionalities of sensor 202 and SAM 204. In other embodiments, a single comparator can be used to perform comparisons.

With some components of an embodiment identified, further details are provided on an exemplary process to evaluate detected audible signals by an embodiment.

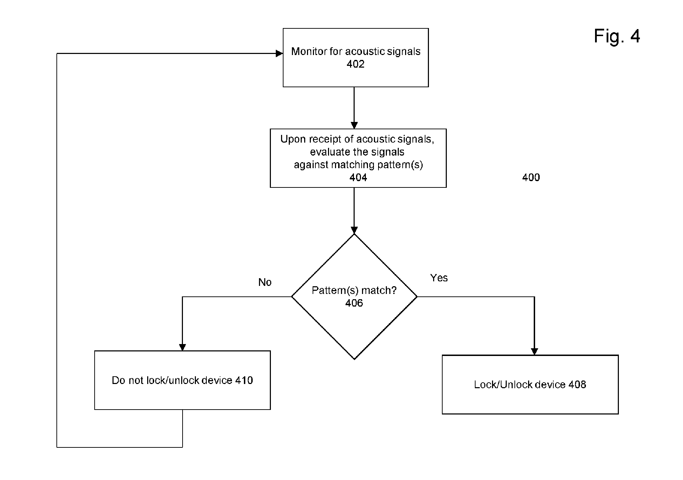

Per Fig. 4, process 400 can be implemented in a software module that operates on processor 206 and, in whole or in part, process 400 can implement, supplement and / or replace functions provided by SAM 204 and ISGM 208, described above. Process 400 may be initiated at any operating point for device 100. Process 400 may also be implemented by a hardware circuit as a state machine, for example by using a programmable logic device (PLD), which may further reduce power requirements for an embodiment.

In process 400, initial process 402 monitors for acoustic signals received at device 100. Such signals are generally received by sensors 202. If no signals is received, then sensors 202 are not activated and do not generate signals. As such, in a "quiet" mode, when no significant audible signals are being received, an embodiment uses less power.

Next, at process 404, when acoustic signal(s) are received at device 100, they are analyzed against matching locking/unlocking patterns. The analysis may be performed in real time, as acoustic signals are received. Alternatively, it may be performed after one or more signals are received. In either analysis regime, the recently received signal is compared with one or more preset patterns to see if the recently received signal builds on top of previously received signal(s) to complete a match of a pattern. In general, detecting a successful or meaningful correlation between the acoustic signals and patterns may be called "completing the match." The signals can be a combination of taps/sounds. One pattern may be expressed as a series of electrical values for expected taps/sounds for a given lock/unlock pattern. The pattern can include values representing audible "spaces" (i.e., silence or no significant audible signals) between taps/sounds and values representing an expected amplitude of such taps/sounds for the pattern. The pattern matching analysis may include comparing the received signals against templates of locking/unlocking patterns. The analysis may include thresholds and templates to determine when a match is or is not made. In determining whether a match is detected for the received signal(s) and a pattern, the analysis can evaluate one or more of the following features of the received signal(s) against expected characteristics for a pattern: a defined time separation between acoustic signals received by the device, a determined location of the acoustic signal, a decay rate of the acoustic signal, an attack rate of the acoustic signal, a pitch of the acoustic signal and a magnitude of the acoustic signal. Other acoustic characteristics can be considered. Digital signal processing may be provided to determine whether the received signal completes a match for a given pattern, and any mathematical technique for pattern-mating or correlation may be used. Further, the concepts herein are not restricted to any particular standard or standards by which it may be determined whether a match has been or has not been completed. In some implementations, an exact match may be called for, in order to complete the match. In other implementations, a match need not be exact, but may be (colloquially speaking) "close enough."

Depending on the results of analyses conducted in process 404, different actions may be taken, as shown by decision process 406. If a pattern match has been recognized (i.e., the match is completed), then process 400 progresses from process 404, through process 406 to process 408, where a command associated with the lock/unlock pattern is executed. The command may be to lock or unlock device 100 and / or to activate/deactivate a component or feature on device 100. Other commands may be provided. A command can be to change an activation state of device 100 from one state to another, which may be either a higher or lower activation state, where one or more components in device 100 are activated and / or deactivated. If a pattern match has not been recognized, then process 400 progresses from process 404, through process 406 to process 410, where no command is executed and process 400 returns to process 402.

It will be appreciated that additional processes, evaluations, commands and branches may be provided for process 400. In other embodiments, process 400 may be implemented in software, applications, modules, circuits, PLDs, programmable logic arrays (PLAs), application specific integrated circuits (ASICs), software, firmware, hardware or other devices, systems and / or techniques known in the art.

Now, further detail is provided on exemplary user interface functions and processes provided for an embodiment. As noted for process 404 (Fig. 4), an embodiment evaluates taps/sounds against a pattern to determine whether or not the taps/sounds match a defined pattern. An embodiment provides a facility to enable a user of device 100 to create and modify a pattern.

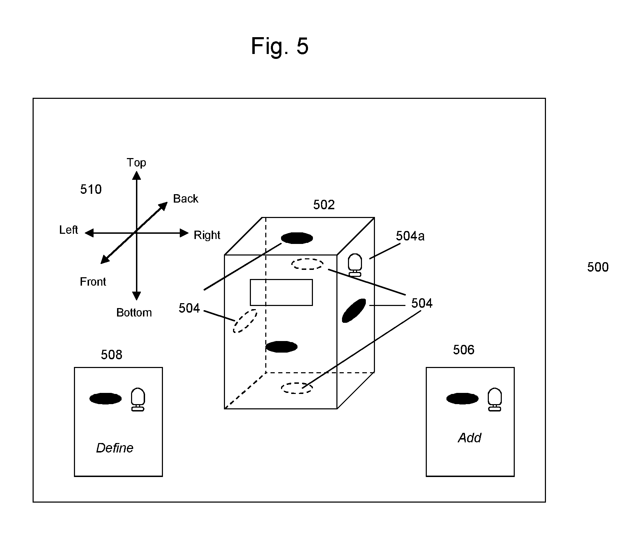

Per Fig. 5, a pattern adjustment module (PAM 616G, Fig. 6) for device 100 is provided that allows a user to define and / or change parameters for an expected pattern. To assist with controls for such changes PAM 616G provides a GUI to allow a user of device 100 to graphically design and change parameters for a given pattern. Fig. 5 shows GUI 500, which can be generated on display 102 and provides a three dimensional pictorial view of device 100, shown as form 502. Form 502 is preferably generated as an outline that conforms to a general physical outline of device 100 to assist in providing a recognizable form identifying locations on device 100. Form 502 is an outline of device 100. Activation pads 504 may be "dragged and dropped" onto various surfaces of form 502 using input device 108 (Fig. 1) or other input mechanisms. Pads 504 that are "dropped" onto hidden areas of form 502 are shown in outline. This GUI and pictorial view of device 100 facilitates in programming patterns and parameters for tap patterns.

PAM 616G may prompt the user to clarify the intended location of a placed pad 504 when there is ambiguity (e.g. is the pad on the left side or front of form 502). Pads 504 can be added by activating add icon 506 which generates a "floating" pad 504 that can be placed through input device 108 (Fig. 1) to a specific location on form 502. Each activation pad 504 as placed on form 502 represents a location on device 100 where one tap signal is expected. If multiple taps are desired at a specific location, then multiple pads 504 are dropped at that location. Each pad 504 is uniquely identified to PAM 616G. Microphone icon 504A may be added and dropped onto form 502, representing that a specific audible signal is expected.

After a series of pads 504 are situated on form 502, a user can link and program a series of pads 504 and other expected inputs to define a pattern. A pattern represents a "lock"/"unlock" password that is associated with a particular command that can be executed on device 100. The pattern definitions are initiated by activating define icon 508.

For one embodiment, when define icon 508 is activated, a second GUI is generated (not shown). The second GUI provides a list of the pads 504 that the user can re-arrange into an order to represent a pattern. Pads 504 can be deleted and added. Characteristics for a tap signal for a particular pad 504 can be defined and changed. Delays between taps can be defined. Table A, below, shows an exemplary pattern being modified after define icon 508 has been activated that can be presented in whole or in part in the second GUI (or a different GUI).

**Table A**

| Pattern Name: | Activate | | | |
|---|---|---|---|---|
| Command: | Turn on display | | | |
| # | Source | Time from previous tap | Characteristic | Delete |
| 1 | Front | 0 | Loud | yes/no |
| 2 | Front | 10-20ms | Soft, decay | yes/no |
| 3 | Bottom | 5-500ms | Loud, sustained | yes/no |
| 4 | Microphone (1) | 40ms-1s | Sound wave | yes/no |
| ... | | | | |
| n | Keyboard | <10 s | "a" key | yes/no |
| p | Accelerometer | < 1s | "side-to-side shake" | yes/no |

The main heading provides the name of the pattern ("activate") and the related command, if matched ("turn on display" of device 100). The pattern comprises a number of expected elements, shown in rows 1-n. An element may be an acoustic element (such as an acoustic signal detected by microphone 116) or may be an input element detected by another input device on device 110 (such as a keystroke entry on the keyboard). The elements are shown in their expected sequence of detection for the pattern. In each row a set of columns is provided to configuration characteristics of that element. A first column identifies the "source" of the signal, which can be used to denote an expected location of a source of an acoustic signal (e.g. using GUI 500, Fig. 5). Direction rose 510 provides some reference locations for device 100 (e.g. the sound is expected to be detected from the "front" of device 100). The source can also denote a specific input device of device 100 (e.g. a specific microphone, a keypad entry, etc.). A "time" column provides an expected separation of time for detection of the present element from the immediately preceding element. A "characteristic" column allows configuration of an expected characteristic of the detected signal, e.g. "loud", "soft", "decaying", etc., to provide colloquial labels for the characteristics, thereby providing context to a user of the GUI. For particular input devices, data files may be provided establishing a template for the signals provided by the input device. A "delete" field may be provided to assist in managing whether the element is kept for the pattern. Additional features can be provided to move and / or duplicate elements. Each entry for each element can be presented in a pull-down menu, where available selections may be provided to assist in populating values for each field.

For context, discussion of entry #4 is provided, which is designated as "Microphone". For this entry, the pattern is expecting that microphone 116(1) receives an audible signal that matches the "sound wave" characteristic, which may be provided as an audio data file accessible by an embodiment. (Another entry can be provided for microphone 116(2) if desired.) For example, a pattern may expect a user to whistle at a certain pitch for the element at entry #4. The microphone entry may be graphically represented by microphone icon 504A (Fig. 5). For a given microphone entry, an embodiment can also prompt a user to provide an actual audio sample for an expected audible entry, by "speaking" to microphone 116, which is received by microphone 116 and stored by an embodiment in an audio file. Other actions, such as keypad entries, may be incorporated as part of the pattern for Table A, as noted per the element at entry #7.

Signals from other input devices on device 110 may provide an element of the pattern. In Table A, item #n is an entry for a keyboard input and item #p is an entry for an expected movement of device 100 (e.g. a "side-to-side" shaking of device 100) as detected by an accelerometer in device 100.

An embodiment can analyze signals from multiple microphones to triangulate a perceived source location of the acoustic signals. The location (e.g. near, far, to the left of the front of device 100, to the right of the front of device 100, behind device 100, etc.) can be used as a parameter for Table A.

In defining parameters for a pattern, the following variables and setting may be established, through changes made to entries in Table A:
● a timer may be used to determine when and / or whether significant "taps" have been imparted on housing 118 within allowable time limits;
● threshold(s) for sensors 116 may need to be established; and
● conditions to activate an interrupt routine for processor 206.

It will be appreciated that for each location of pad 504 on form 502, a different audible signature is expected to be received by microphone 116 for a tap signal that is correctly imparted at that location. This is due, in part, to the different distances of each pad 504 from microphone 116 and the different acoustic properties that a tap imparted at one pad 504 can have compared to the same tap (i.e., a tap having the same force and duration) imparted at another pad 504. Further the composition of housing 118 may differ at each location of each pad 504, thereby changing the audible characteristics of the tap between pads. An embodiment can analyze the audible signals received and determine whether the signals match to a tap to any of the expected locations on housing 118 of device 110.

Another feature is a "record" feature, where device 100 can record audible signals that are made around device 100 (as detected, for example, by one or more of microphones 116(1), 116(2)) and the recorded signals can be used as an audible signature for a pattern or part of a pattern. This record feature can be provided as part of PAM 616G or provided as a separate module in device 100 or in a different device. The record feature facilitates creating a signature of audible signals for a pattern that are accurate representations of a desired pattern (e.g. in intensity, location and / or timing of taps).

Other GUIs may be provided to assist with managing patterns used to control operation of device 100. Any of the GUIs and underlying control modules can be operated on device 100 or on another device and the pattern data can be provided to device 100.

With functions and operations of features of an embodiment provided, further detail is provided on components in device 100.

Referring to Fig. 6, device 100, in addition to components described in Fig. 1, has communication subsystems, which control communication functions, including data and voice communications. These functions are controlled and operated through communication sub-system 602 and short-range communication sub-system 604. Collectively, sub-systems 602 and 604 provide the signal-level interface for all communication technologies processed by device 100. Auxiliary input/output (I/O) ports 606 and serial port 608 are provided to allow device 100 to be connected to and communicate with additional external devices. Microphone port 610 provides a port for microphone 116(1) (Fig. 1). It is also connected to SAM 204. Non-volatile memory in the form of flash memory 612 is provided. RAM 614 is also provided. Either memory can be used to store portions of expected acoustic patterns and other data relating to pattern analysis.

Various modules 616 stored in memory 612 provide operational controls to further process and log the communications. Such modules are programs that are executed on processor 206.

Voice communication module 616A and data communication module 616B control operations of voice and data communications with sub-systems 602 and 604 for device 100. Calendar module 616C provides a scheduling application to track calendar appointments on device 100. Address book module 616D provides an address storage application to track contact data on device 100. Status module 616D provides status information on various internal and external systems and components for device 100.

Features to control activation of modules as described herein (per for example Fig. 4) are controlled through activation module 616F. Briefly, SAM 204 can be controlled by activation module 616F with sensors 202 to detect a tap/sound has been entered, when a tap/sound pattern has been matched and what actions/commands to initiate upon a match. Features to control pattern parameters (per embodiments shown in Fig 5) are controlled through PAM 616G, as described earlier. Other modules 616N are also provided.

Clock 618 provides a synchronization clock for device 100. Global positioning system (GPS) module 620 provides location data for device 100. Radio frequency identification (RFID) module 622 provides an interface to manage RFID tags and data.

Communication sub-system 602 includes receiver 624, transmitter 626 and one or more antennas, illustrated as receive antenna 628 and transmit antenna 630. In addition, communication sub-system 602 also includes processing modules, such as digital signal processor (DSP) 632 and local oscillators (LOs) 634. Specific features of communication sub-system 602 are dependent upon the communication network in which device 100 operates, where such networks were described earlier.

Short-range communication sub-system 604 enables communication between device 100 and other proximate systems or devices, which need not necessarily be similar devices. For example, the short-range communication sub-system may include an infrared device and associated circuits and components, or a Bluetooth (trade-mark) communication module to provide for communication with similarly enabled systems and devices.

Powering components of device 100 is power source 636. In one embodiment, power source 636 includes one or more batteries. In another embodiment, power source 636 is a single battery pack, especially a rechargeable battery pack. A power switch (not shown) may be provided as an "on/off" switch for device 100. A power source interface (not shown) may be provided in hardware, firmware, software or a combination of such elements to selectively control access of components in device 100 to power source 636. Upon activation of the power switch a module 616 is initiated to turn on device 100. Upon deactivation of the power switch, a module 616 is initiated to turn off device 100. Power to device 100 may also be controlled by other devices and by software modules 616. When in a "locked" state, activation module 616F may be initiated to selectively provided power to one or more modules, systems, features or applications operating on device 100, depending on the level of activation of device 100. Some devices 100 may not have all components described in Fig. 6.

In view of features provided above, some benefits, features and / or advantages of embodiments include the following. An embodiment can detect a tap signal using existing components in device 100, including existing passive components (e.g., microphone 116). This provides a low-power and low additional cost system for detecting taps signals. An embodiment can program signatures for tap signals through a GUI. This provides an intuitive interface for graphically programming a tap signature. An embodiment can program signatures for tap signals through a recording actual taps on device 100. This provides direct input of audible signals for an expected tap signal for a password. As such the location, timing and duration of the components of the tap signal are more precisely captured by the system. An embodiment can define tolerances for aspects of received tap signals when evaluating same against an expected tap signal for a password. As flexibilities are provided for elements of the tap signal. An embodiment can define tolerances for aspects of received tap signals when evaluating same against an expected tap signal for a password. As such some tolerances for the location, timing and duration of the components of the tap signal are provided for the system.

It will be appreciated that the embodiments relating to methods, devices, processes, application, modules and systems may be implemented in a combination of electronic hardware, firmware and software. The firmware and software may be implemented as a series of modules, applications and/or processes that provide the functionalities described herein. Algorithms, processes and methods described herein may be executed in different order(s). Interrupt routines may be used. Data may be stored in volatile and non-volatile devices described herein and may be updated by the hardware, firmware and/or software.

As used herein, the wording "and / or" is intended to represent an inclusive-or. That is, "X and / or Y" is intended to mean X or Y or both.

In this disclosure, where a threshold or measured value is provided as an approximate value (for example, when the threshold is qualified with the word "about"), a range of values will be understood to be valid for that value. For example, for a threshold stated as an approximate value, a range of about 25% larger and 25% smaller than the stated value may be used. Thresholds, values, measurements and dimensions of features are illustrative of embodiments and are not limiting unless noted. Further, as an example, a "sufficient" match with a given threshold may be a value that is within the provided threshold, having regard to the approximate value applicable to the threshold and the understood range of values (over and under) that may be applied for that threshold. A feature described in the singular can by extension apply to the feature described in the plural and vice versa unless specifically noted.

The present disclosure is defined by the claims appended hereto, with the foregoing description being merely illustrative of embodiments of the disclosure. Those of ordinary skill may envisage certain modifications to the foregoing embodiments which, although not explicitly discussed herein, do not depart from the scope of the disclosure, as defined by the appended claims.

## Claims

1. An activation management system for an electronic device, comprising:
a sensor generating an output signal when said sensor detects an acoustic signal; and
an activation module receiving said output signal, said activation module evaluating said output signal against a pattern to determine if said output signal completes a match for said pattern and changing an activation state of said device if said output signal completes said match,
wherein said output signal is an electrical signal proportionate to or otherwise a function of acoustic energy in said acoustic signal received by said sensor.

2. The activation management system for an electronic device as claimed in claim 1, wherein:
a tapping on a housing of said device is said acoustic signal; and
said sensor is a microphone.

3. The activation management system for an electronic device as claimed in claim 1 or claim 2, wherein said activation module further comprises a signal filter to isolate said output signal from other acoustic signals detected by said microphone.

4. The activation management system for an electronic device as claimed in claim 3, wherein said signal filter disregards said acoustic signal if a magnitude of said acoustic signal is below a threshold.

5. The activation management system for an electronic device as claimed in any one of claims 2 to 4, wherein:
a) said pattern is a locking pattern; and said activation module changes said activation state to a locked state if said output signal completes said match for said pattern, said locked state prohibiting activation of at least one module operating on said device, or
b) said pattern is an unlocking pattern; and said activation module changes said activation state to an unlocked state if said output signal completes said match for said pattern, said unlocked state allowing activation of at least one application operating on said device.

6. The activation management system for an electronic device as claimed in claim 5, wherein said pattern comprises parameters selected from any combination of: a defined time separation between acoustic signals received by said sensor, a determined location on a housing of said device of said acoustic signal, a decay rate of said acoustic signal, an attack rate of said acoustic signal, a pitch of said acoustic signal and a magnitude of said acoustic signal.

7. The activation management system for an electronic device as claimed in claim 5 or claim 6:
wherein said activation module evaluates an audio file against said output signal to determine if said output signal completes said match, or
wherein said activation module further evaluates a keystroke against keystroke entries on a keypad associated with said device to determine if said activation state is to be changed.

8. The activation management system for an electronic device as claimed in any preceding claim, further comprising:
a pattern adjustment module operating on said device providing a graphical user interface (GUI) providing an icon to define an expected location on said device for a source of an acoustic element of said pattern.

9. The activation management system for an electronic device as claimed in claim 8:
wherein said pattern adjustment module generates in said GUI an outline of a device to receive said icon, or
said pattern adjustment module further generates a second GUI allowing modifications to be made to said element in said pattern.

10. The activation management system for an electronic device as claimed in claim any preceding claim, further comprising:
a module to record audible signals for use as an acoustic element of said pattern.

11. A method for controlling activation of modules operating on an electronic device, comprising:
monitoring for an output signal generated from a sensor in said device when said sensor detects an acoustic signal;
evaluating said output signal against a pattern; and
changing an activation state of said device if said output signal completes a
match for said pattern,
wherein said output signal is an electrical signal proportionate to or otherwise a function of acoustic energy in said acoustic signal received by said sensor.

12. The method for controlling activation to applications operating on an electronic device as claimed in claim 11, wherein:
a tapping on a housing of said device is said acoustic signal; and
said sensor is a microphone.

13. The method for controlling activation to applications operating on an electronic device as claimed in claim 11 or claim 12, further comprising:
disregarding said output signal if a magnitude of said output signal is below a threshold.

14. The method for controlling activation to applications operating on an electronic device as claimed in any one of claims 11 to 13, wherein:
a) said pattern is a locking pattern; and said activation state is changed to a locked state if said output signal completes a match for said pattern, said locked state prohibiting activation of at least one application operating on said device, or
b) said pattern is an unlocking pattern; and said activation state is changed to an unlocked state if said output signal completes a match for said pattern, said unlocked state allowing activation of at least one application operating on said device.

15. The method for controlling activation to applications operating on an electronic device as claimed in any one of claims 11 to 14:
wherein said pattern comprises parameters selected from any combination of: a defined time separation between acoustic signals received by said device, a determined location of said acoustic signal and a magnitude of said acoustic signal, or
further comprising generating a graphical user interface (GUI) providing an interface and an icon to define an expected location on said device for a source of an acoustic element of said pattern.

## Amended claims

### Amended claims in accordance with Rule 137(2) EPC.

**1.** An activation management system for an electronic device (100), comprising:
a microphone (116) generating an output signal when the microphone (116) detects an acoustic signal generated by a tapping on a housing of the electronic device (100);
a pattern adjustment module (616G) operating on the electronic device (100) that generates
a first graphical user interface (GUI) providing a form (502) of the electronic device (100) and providing an interface for placement of one or more activation pads (504) at various locations on the form (502) as acoustic elements of a pattern for a command to change an activation state of the electronic device (100); and
a second GUI providing a list of the one or more activation pads (504) and an associated characteristic with each of the one or more activation pads (504) to define parameters of the pattern;
and
an activation module (616F) receiving the output signal, the activation module (616F) (616F) evaluating the output signal against the pattern to determine if the output signal completes a match for the pattern and initiating the command associated with the pattern if the output signal completes the match.

**2.** The activation management system for an electronic device as claimed in claim 1, wherein the second GUI further provides an interface to
enter a delay time between signals expected at two of the activation pads (504) in the list

**3.** The activation management system for an electronic device as claimed in claim 1 or claim 2, wherein the second GUI further provides an interface to
re-order the one or more activation pads (504) in the list.

**4.** The activation management system for an electronic device as claimed in any preceding claim, wherein the associated characteristic is one of a decay rate of an acoustic signal expected at the activation pad (504), an attack rate of the acoustic signal, a pitch of the acoustic signal or a magnitude of the acoustic signal.

**5.** The activation management system for an electronic device as claimed in any preceding claim, wherein the second GUI further provides an interface to
enter a recording of an audio sample file as part of the pattern.

**6.** The activation management system for an electronic device as claimed in claim 5, wherein the second GUI further provides an interface to
record the recording of the audio sample file using the microphone (116).

**7.** The activation management system for an electronic device as claimed in claim 5 or claim 6, wherein the activation module (616F) evaluates the audio sample file against the output signal to determine if the output signal completes the pattern.

**8.** The activation management system for an electronic device as claimed in any preceding claim, wherein the second GUI further provides an interface to
enter an entry from a keypad (112) on the electronic device (100) as part of the pattern.

**9.** The activation management system for an electronic device as claimed in any preceding claim, wherein the activation module (616F) further comprises a signal filter to isolate the output signal from other acoustic signals detected by the microphone (116).

**10.** The activation management system for an electronic device as claimed in claim 9, wherein the signal filter disregards the acoustic signal if a magnitude of the acoustic signal is below a threshold.

**11.** The activation management system for an electronic device as claimed in any preceding claim, wherein:
the pattern is a locking pattern; and
the activation module (616F) changes the activation state to a locked state if the output signal completes the match for the pattern, the locked state prohibiting activation of at least one module operating on the electronic device (100).

**12.** The activation management system for an electronic device as claimed in any one of claims 1 to 10, wherein:
the pattern is an unlocking pattern; and
the activation module (616F) changes the activation state to an unlocked state if the output signal completes the match for the pattern, the unlocked state allowing activation of at least one application operating on the electronic device (100).

**13.** A method for controlling activation of modules operating on an electronic device (100), comprising:
defining a pattern for a command to change an activation state of the electronic device (100) through a first graphical user interface (GUI) on the electronic device (100) providing a form (502) of the electronic device (100) and providing an interface for placement of one or more activation pads (504) at various locations on the form (502) as acoustic elements of the pattern, the acoustic elements detected by a microphone (116) in the electronic device (100);
defining parameters of the pattern through a second GUI on the electronic device (100) through a list of the one or more activation pads (504) having an associated characteristic with each of the one or more activation pads (504);
monitoring for an output signal generated from the microphone (116);
evaluating the output signal against the pattern; and
changing an activation state of the electronic device (100) if the output signal completes a match for the pattern.

**14.** The method for controlling activation of modules operating on an electronic device as claimed in claim 13, wherein:
a) the pattern is a locking pattern; and the activation state is changed to a locked state if the output signal completes a match for the pattern, the locked state prohibiting activation of at least one application operating on the electronic device (100), or
b) the pattern is an unlocking pattern; and the activation state is changed to an unlocked state if the output signal completes a match for the pattern, the unlocked state allowing activation of at least one application operating on the electronic device (100).

**15.** The method for controlling activation of modules operating on an electronic device as claimed in claim 13 or claim 14, wherein the associated characteristic is selected from any of: a defined time separation between acoustic signals received by the electronic device (100), an attack rate of the acoustic signal, a pitch of the acoustic signal or a magnitude of the acoustic signal.
